# EUROPEAN PATENT APPLICATION

(11) **EP 4 489 119 A1**
(43) Date of publication of application: **08.01.2025**
(21) Application number: 23760010.1
(22) Date of filing: 22.02.2023
(51) Int. Cl.: H01M 4/38, H01M 4/36

(54) **NEGATIVE ELECTRODE AND NEGATIVE ELECTRODE ACTIVE MATERIAL FOR SECONDARY BATTERIES, AND SECONDARY BATTERY**

(30) Priority: 28.02.2022 JP 2022030146
(71) Applicant: Panasonic Intellectual Property Management Co., Ltd., Osaka-shi, Osaka 540-6207 (JP)
(72) Inventor: SHIBATA, Sho, Kadoma-shi, Osaka 571-0057 (JP)
(74) Representative: Novagraaf International SA
(86) International application number: PCT/JP2023/006356
(87) International publication number: WO 2023/163011

(57) **Abstract**

A negative electrode active material for secondary batteries including a composite particle containing a conductive polymer and Si-containing particles. In the composite particle, a plurality of the Si-containing particles are linked together via the conductive polymer, and the conductive polymer is doped with a dopant.

## Description

### [Technical Field]

The present invention relates to a negative electrode active material and a negative electrode for secondary batteries, and a secondary battery.

### [Background Art]

Silicon (Si)-containing materials are known to be capable of storing much lithium ions per unit volume, as compared to carbonaceous materials such as graphite. Studies have been made therefore to apply a Si-containing material to a negative electrode active material of a secondary battery.

Patent Literature 1 proposes an organic polymer-silicon composite particle for a negative electrode active material of a lithium secondary battery. The organic polymer-silicon composite particle includes a polymer matrix having free space, and silicon fine particles. The organic polymer matrix having free space is at least one or more selected from polypyrrole, polyaniline, or polythiophene, and the silicon fine particles are dispersed in the organic polymer matrix having free space. A metal coating layer is formed on the surface of the organic polymer-silicon composite particle.

Non-Patent Literature 1 proposes a negative electrode including a current collector and a composite of a conductive organic polymer and silicon fine particles formed on the current collector.

### [Citation List]

### [Patent Literature]

Patent Literature 1: Japanese Patent No. 5712439 (JP2013-522820A)

### [Non-patent Literature]

Non-patent Literature 1: Nat. Commun. 2013, 4, 1943

### [Summary of Invention]

### [Technical Problem]

Si-containing materials, although having high capacity, are less conductive than carbonaceous materials, and expand and contract considerably in association with absorption and release of lithium ions thereinto and therefrom. When the Si-containing material expands, the negative electrode expands, and when the Si-containing material contracts, the current collecting ability of the negative electrode deteriorates.

### [Solution to Problem]

In view of the above, one aspect of the present invention relates to a negative electrode active material for secondary batteries, including: a composite particle containing a conductive polymer and Si-containing particles, wherein in the composite particle, a plurality of the Si-containing particles are linked together via the conductive polymer, and the conductive polymer is doped with a dopant.

Another aspect of the present invention relates to a negative electrode for secondary batteries, including the above-described negative electrode active material for secondary batteries.

Still another aspect of the present invention relates to a secondary battery, including: a positive electrode; a negative electrode; and a nonaqueous electrolyte, wherein the negative electrode is the above-described negative electrode for secondary batteries.

### [Advantageous Effects of Invention]

According to the present invention, it is possible to suppress the expansion of a negative electrode for secondary batteries containing Si-containing particles.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

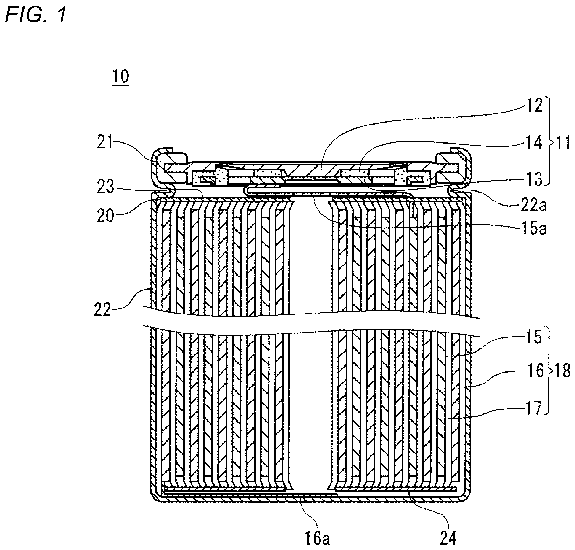

[FIG. 1] A longitudinal cross-sectional view illustrating a configuration of a secondary battery according to an embodiment of the present invention.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B. The present disclosure encompasses a combination of matters recited in any two or more claims selected from plural claims in the appended claims. In other words, as long as no technical contradiction arises, matters recited in any two or more claims selected from plural claims in the appended claims can be combined.

### <Negative electrode active material>

The negative electrode active material for secondary batteries according to the present embodiment includes composite particles, and the composite particles each include a conductive polymer and Si-containing particles. The negative electrode active material may include a material other than the composite particles. Examples of the material other than the composite particles include a carbonaceous material, a Si-containing material, and a Sn-containing material. The negative electrode active material may be used singly or in combination of two or more kinds.

### <Composite particle>

The composite particle contains a conductive polymer and Si-containing particles. The particle shape of the composite particle is not particularly. In the composite particle, a plurality of the Si-containing particles are linked together via the conductive polymer. In other words, it can be seen that a plurality of the Si-containing particles are dispersed in a matrix of the conductive polymer. In the composite particle, for example, at least part of the surfaces of the individual Si-containing particles is covered with the conductive polymer, and such Si-containing particles aggregate together with the conductive polymer, forming a composite particle.

The content of the composite particles in the negative electrode active material is not particularly limited, and may be 100%, but may be 5 mass% to 50 mass%, and may be 5 mass% to 30 mass%, in view of more significantly suppressing the expansion of the negative electrode while ensuring high capacity.

The composite particle has the following characteristics.

First, because of the inclusion of Si-containing particles, the composite particle has high capacity, and serves to significantly increase the capacity of the negative electrode active material or the negative electrode. Especially when nanosilicon particles are used as the Si-containing particles, composite particles with higher capacity can be obtained because substantially 100% (at least 90 mass%) of nanosilicon particles are formed of silicon alone. Note that the conductive polymer can also exhibit a capacity through Faraday or non-Faraday reactions.

Second, the plurality of Si-containing particles are linked together via the conductive polymer, forming a good electron conductive network within the individual composite particles, which increases the conductivity of the composite particle. To form a better electron conductive network, it is desirable to increase the conductivity of the conductive polymer. For example, by doping the conductive polymer with a dopant, the conductivity can be remarkably increased.

Third, the composite particle has free volume derived from the conductive polymer. Free volume generally refers to the volume of a void formed within the conductive polymer domain. The free volume absorbs the volume change of the Si-containing particles due to the absorption and release of lithium ions, or the stress caused by the volume change. Therefore, the expansion of the negative electrode due to repeated charging and discharging is suppressed, the current collecting ability of the negative electrode is likely to be maintained, and the capacity is likely to be maintained.

Fourth, the Si-containing particles are covered with a conductive polymer, which moderately restricts the contact between the Si-containing particles and the electrolyte, and suppresses side reactions. Due to suppressed side reactions, the capacity retention rate can be maintained high, and due to reduced volume of by-products, the effect of suppressing the expansion of the negative electrode can be enhanced.

The content of the Si-containing particles in the composite particle is, for example, 30 mass% or more, may be 50 mass% or more, or 55 mass% or more, and may be 60 mass% or more. The higher the content of the Si-containing particles in the composite particle is, the more likely a negative electrode with high capacity can be obtained. However, in view of enhancing the effect of suppressing the expansion of the negative electrode, the content of the Si-containing particles in the composite particle is desirably not excessively high, and may be 90 mass% or less or 80 mass% or less.

The remainder in the composite particle, other than the Si-containing particles, is mostly the conductive polymer, and 90 mass% to 100% of the remainder may be the conductive polymer.

Since the composite particle contains a conductive polymer, the powder resistivity thereof is lower than that when containing a nonconductive polymer, which is, for example, 10³ Ω·cm to 10⁷ Ω·cm. When the composite particle has such a volume resistivity, the internal resistance of the negative electrode becomes low, and the interface resistance between the negative electrode mixture layer and the negative electrode current collector described below also becomes low. As a result, the current collecting ability of the negative electrode is likely to be maintained high, and the capacity is also likely to be maintained high.

The powder resistivity is measured by a four-point probe method, under application of a pressure of 204 Kgf/cm² to the composite particle, with a powder resistivity meter (e.g., Loresta SP, available from Mitsubishi Chemical Analytech Co., Ltd. (currently, Nitto Seiko Analytic Co., Ltd. )).

The particle diameter D50 at 50% cumulative volume in a volume-based particle size distribution of the composite particles (hereinafter, D50 is referred to as an "average particle diameter"), for example, may be 100 µm or less, may be 50 µm or less, and may be 30 µm or less. When the average particle diameter of the composite particles has such an upper limit, a local volume change and a stress concentration of the Si-containing particles are unlikely to occur, and the current collecting ability is more likely to be maintained. With such a particle morphology, it is easy to control the sulfur element content in the composite particles to less than 0.05 mass%.

On the other hand, the average particle diameter of the composite particles, for example, may be 1 µm or more, may be 10 µm or more, and may be 20 µm or more. When the average particle diameter of the composite particles has such a lower limit, the surface area of the Si-containing particles is not excessively increased, which is effective in suppressing side reactions and allows for easy achievement of high capacity.

The volume-based particle size distribution of the composite particles is measured by a laser diffraction and scattering method using a particle diameter distribution analyzer (e.g., MT3000II available from Microtrac Inc.) For the measurement, a dispersion of the composite particles dispersed in pure water is used.

The particle diameter D10 at 10% cumulative volume in the volume-based particle size distribution of the composite particles may be 0.5 µm or more (e.g., 0.5 µm to 50 µm). In this case, the proportion of the composite particles with very small size is low, which is effective in suppressing side reactions and allows for easy achievement of high capacity.

The particle diameter D90 at 90% cumulative volume in the volume-based particle size distribution of the composite particles may be 500 µm or less (e.g., 50 µm to 500 µm or 100 µm to 300 µm). In this case, the proportion of the composite particles with excessively large size is small, a local volume change and a stress concentration are unlikely to occur, and furthermore, the current collecting ability is more likely to be maintained.

### <Conductive polymer>

The conductive polymer refers to an organic polymer that exhibits conductivity either alone or when doped with a dopant. A typical example of the conductive polymer is a π-conjugated polymer.

Examples of the π-conjugated polymer include polymers the backbone of which is polypyrrole, polythiophene, polyaniline, polyfuran, polyacetylene, polyphenylene, polyphenylene vinylene, polyacene, polythiophene vinylene, or the like. These polymers also include a homopolymer, a copolymer of two or more kinds of monomers, and derivatives thereof (e.g., a substituted product having a substituent). For example, polyaniline includes poly(N-methylaniline) and the like in which at least part of the amino groups are substituted by a methyl group. Polythiophene includes poly(3,4-ethylenedioxythiophene) and the like. Note that, however, these are merely specific examples, and the conductive polymer is not limited to these examples.

The conductive polymer may be doped with a dopant. By doping a dopant, the conductivity of the conductive polymer is increased, the powder resistivity of the composite particles is reduced, and the current collecting ability is more likely to be maintained. The dopant, for example, adds protons to the conductive polymer, and generates anions. The anions attach to a protonated conductive polymer, allowing the conductive polymer to stably exhibit conductivity.

The content of the dopant in the composite particle is not particularly limited, but may be, for example, 0.1 mass% to 10 mass%, and may be 1 mass% to 5 mass%.

The dopant may be appropriately selected depending on the kind of the conductive polymer. The dopant may have, for example, an oxoacid group capable of releasing protons. The dopant may be an oxo acid, an oxo acid ester, and the like that can release protons. These may be in an ionic (anionic) state.

Examples of the dopant in an ionic state include sulfate ion, nitrate ion, phosphate ion, borate ion, halide ions (F⁻, Cl⁻, Br⁻, I⁻), benzenesulfonate ion, naphthalenesulfonate ion, toluenesulfonate ion, methanesulfonate ion (CF₃SO₃⁻), perchlorate ion (ClO₄⁻), tetrafluoroborate ion (BF₄⁻), hexafluorophosphate ion (PF₆⁻), fluorosulfate ion (FSO₃⁻), bis(fluorosulfonyl)imide ion (N(FSO₂)₂⁻), and bis(trifluoromethanesulfonyl)imide ion (N(CF₃SO₂)₂⁻). These may be used singly or in combination of two or more kinds.

The dopant may be a polymer. Examples of the polymer include polyvinyl sulfonic acid, polystyrene sulfonic acid, polyallyl sulfonic acid, polyacrylic sulfonic acid, polymethacrylic sulfonic acid, poly(2-acrylamido-2-methylpropanesulfonic acid), polyisoprene sulfonic acid, and polyacrylic acid. These may be a homopolymer or a copolymer of two or more kinds of monomers. These may be in an ionic (anionic) state. These may be used singly or in combination of two or more kinds.

The dopant may contain phosphorus element. Specifically, the dopant may contain phosphoric acid, phosphonic acid, phosphoric acid ester, phosphonic acid ester, or the like. When the conductive polymer contains phosphorus element, the conductive polymer may be determined as containing a dopant containing phosphorus element.

The phosphoric acid ester may be, for example, phytic acid (inositol hexaphosphate). Especially when the conductive polymer includes polyaniline, it is desirable to use as a dopant, phytic acid which has an affinity for both the Si-containing particles and the polyaniline. The phytic acid acts as a proton dopant for the conductive polymer and forms a hydrogen bond with the hydroxyl group on the Si surface. The Si-containing particles are therefore likely to be covered uniformly with the conductive polymer.

### <Polyaniline>

The polyaniline is a conductive polymer including aniline (C₆H₅-NH₂) as a monomer. The polyaniline includes polyaniline and its derivatives as described above.

For example, the polyaniline in the present invention encompasses: derivatives in which an alkyl group, such as methyl group, is added to part of the benzene ring; derivatives in which a halogen group or the like is added to part of the benzene ring; and derivatives in which an alkyl group, such as methyl group, is added to part of the amino group, as long as they are conductive polymers the backbone of which is aniline.

The structure of the polyaniline includes a structural unit (sometimes called an IP structure) that can form a benzenoid backbone of (-C₆H₄-NH-), and a structural unit (sometimes called an NP structure) that can form a quinoid backbone of (-C₆H₄=N-).

### <Si-containing particles>

The Si-containing particles are particles of a Si-containing material, and the particle shape is not particularly limited. Examples of the Si-containing material include Si simple substance, silicon alloy, and silicon compound.

As the Si-containing particles, particles each containing a lithium-ion conductive phase and a silicon phase dispersed in the lithium-ion conductive phase may be used. The lithium-ion conductive phase may be a SiO₂ phase, a silicate phase (e.g., a lithium silicate phase), a carbon phase, and the like.

A particle containing a SiO₂ phase and a silicon phase dispersed in the SiO₂ phase can be represented by SiOₓ where 0.5 ≤ x < 2 (e.g., 0.5 ≤ x < 1.6). The silicon phase dispersed in the SiO₂ phase is fine. In a particle containing a lithium silicate phase and a silicon phase dispersed in the lithium silicate phase, the lithium silicate phase can be represented by Li_{2z}SiO_{2+z} where 0 < z < 1 (e.g., z = 1/2).

The average particle diameter of the Si-containing particles is, for example, 10 nm to 500 nm, and may be 30 nm to 50 nm. Nanosilicon particles having such an average particle diameter may be used. Nanosilicon particles are easily available. When the average particle diameter of the Si-containing particles is within the above range, composite particles of an appropriate size can be easily synthesized, and the volume change of the composite particles can be more significantly suppressed.

Although it is desirable to measure the average particle diameter of the Si-containing particles before initial charging and discharging, the measurement may be made after the battery is fabricated and then subjected to several times of charging and discharging. In this case, for measurement, it is desirable to use the Si-containing particles sampled from the negative electrode taken out from the battery in a fully discharged state.

Note that the quantity of charged electricity when a battery in a fully discharged state (depth of discharge (DOD) = 100%) is charged to a fully charged state (state of charge (SOC) = 100%, DOD = 0%) corresponds to the rated capacity. The voltage of the battery in a fully charged state corresponds to the end-of-charge voltage. The voltage of the battery in a fully discharged state corresponds to the end-of-discharge voltage.

The average particle diameter of the Si-containing particles is measured by observing the cross section of the negative electrode using a SEM or a TEM. Specifically, it is determined by averaging the maximum diameters of randomly-selected 100 Si-containing particles.

At least part of the surfaces of the Si-containing particles may be covered with a carbonaceous material having conductivity. In this case, the conductivity of the Si-containing particles is increased, the current collecting ability of the negative electrode is more likely to be maintained, and the capacity is more likely to be maintained. For example, Si-containing particles and a raw material of carbonaceous material (pitch, tar, carbon black, etc.) may be mixed together and fired at a predetermined temperature, thereby to cover at least part of the surfaces of the Si-containing particles with a carbonaceous material having conductivity.

### <Sulfur element>

The composite particle may contain sulfur element. The sulfur element may be derived from an oxidant used as an initiator when polymerizing the conductive polymer.

There is a concern that sulfur element may generate harmful sulfur-based gas in association with decomposition during charging and discharging. The content of the sulfur element in the composite particle, therefore, is desirably low. For example, the content is desirably set to less than 0.05 mass%, which may be 0.01 mass% or less. On the other hand, a small amount of the sulfonic acid group can be expected to exert an effect of facilitating the dissociation of the lithium salt contained in the electrolyte in the conductive polymer domain, to improve the lithium-ion conductivity. In view of achieving such an effect, the content of the sulfur element in the composite particle is desirably set to 0.001 mass% or more.

The content of the sulfur element in the composite particle is measured, for example, by inductively coupled plasma atomic emission spectroscopy (ICP-AES). Specifically, a sample of the composite particles is dissolved in a heated acid solution (a mixed acid of hydrofluoric acid, nitric acid, and sulfuric acid), to sufficiently extract the sulfur element, and remove the solution residue by filtration. Then, the resultant filtrate is analyzed by ICP-AES, to measure the spectral intensity of sulfur. Subsequently, a commercially available standard solution of sulfur element is used to create a calibration curve, from which the sulfur content is calculated.

### <Nitrogen element>

The composite particle may further contain nitrogen element. The nitrogen element may be derived from an oxidant used as an initiator when polymerizing the conductive polymer. The sulfur element and the nitrogen element may be derived from, for example, ammonium persulfate. Ammonium persulfate is suitable as a polymerization initiator when polymerizing aniline into polyaniline.

### <Preferred embodiment>

One preferred embodiment of the composite particle is an embodiment in which the conductive polymer is polyaniline, and the dopant is phytic acid. In the case of using ammonium persulfate in synthesizing polyaniline, the composite particle may contain sulfur element. In order to control the content of the sulfur element in the composite particle within a desired range, it is desirable to perform a predetermined cleaning step.

### <Method of producing composite particles>

A method of producing composite particles contained in the negative electrode active material for secondary batteries includes, for example, the following first to third steps.

### (i) First step

The first step is a step of preparing a liquid polymerization mixture, to synthesize a composite. The liquid polymerization mixture is prepared by mixing a monomer which is a raw material of conductive polymer, a polymerization initiator containing sulfur element, Si-containing particles, and a dopant agent. When, for example, polyaniline is synthesized as the conductive polymer, aniline is used as the monomer. As the polymerization initiator containing sulfur element, a peroxide is desirable, and, for example, ammonium persulfate is used. As the Si-containing particles, for example, nanoparticles having an average particle diameter of 10 nm to 500 nm are used.

When the initiator is dissolved in the liquid polymerization mixture, the polymerization of the monomer proceeds, to produce a conductive polymer. In this process, the conductive polymer grows so as to cover at least part of the surfaces of the Si-containing particles. This provides a composite containing a conductive polymer and Si-containing particles, in which a plurality of the Si-containing particles are linked together by the conductive polymer.

### (ii) Second step

The second step is a step of pulverizing the composite. For pulverization, a pulverizer, such as a mixer, mill, or mortar, may be used. By pulverization, composite particles having a desired size, for example, a particle diameter D50 (average particle diameter) at 50% cumulative volume in a volume-based particle size distribution of 100 µm or less are obtained. This can significantly improve the cleaning effect in the subsequent cleaning step.

### (iii) Third step

The third step is a step of cleaning the composite particles. The cleaning is desirably performed until the content of the sulfur element in the composite particles reaches less than 0.05 mass%. The cleaning may be done by any method, but can be done by washing with water. The sulfur element is derived from the polymerization initiator containing sulfur element. If much residue of the polymerization initiator remains in the composite particles, this induces side reactions, tending to lead to deterioration in battery performance. Besides, there is a concern that harmful sulfur-based gas may be generated in association with decomposition. On the other hand, such disadvantages can be avoided by reducing the content of the sulfur element in the composite particles to less than 0.05 mass% through cleaning.

Before pulverizing the composite, the composite may be cleaned. In this case, cleaning of the composite particles after pulverization may be omitted, but desirably, cleaning of the composite particles after pulverization is also performed additionally.

### <Negative electrode>

The negative electrode includes a negative electrode mixture layer containing a negative electrode active material, and a negative electrode current collector. The negative electrode mixture layer can be formed by applying a negative electrode slurry of constituent components of the negative electrode mixture dispersed in a dispersion medium, onto a surface of the negative electrode current collector, followed by drying. The dry applied film may be rolled as necessary.

The negative electrode mixture contains a negative electrode active material as an essential component, and may contain, as optional components, a binder, a thickener, a conductive agent, and like. The negative electrode active material contains the above-described composite particles, and may contain materials other than the composite particles. The negative electrode active material may include, for example, a carbonaceous material, such as graphite, graphitizable carbon (soft carbon), and non-graphitizable carbon (hard carbon).

As the binder for the negative electrode, for example, a resin material is used. Examples of the binder include a fluorocarbon resin, a polyolefin resin, a polyamide resin, a polyimide resin, an acrylic resin, a vinyl resin, and a rubbery material (e.g., styrene butadiene copolymer (SBR)). The binder may be used singly, or in combination of two or more kinds.

The thickener may be, for example, a cellulose derivative, such as cellulose ether. Examples of the cellulose derivative include carboxymethyl cellulose (CMC), and modified products thereof, and methyl cellulose. The thickener may be used singly or in combination of two or more kinds.

Examples of the conductive material include carbon nanotubes (CNTs), carbon fibers other than CNTs, and conductive particles (e.g., carbon black, graphite).

The dispersion medium used in the negative electrode slurry is not particularly limited, but may be, for example, water, an alcohol, N-methyl-2-pyrrolidone (NMP), a mixed solvent of these, or the like.

As the negative electrode current collector, for example, a metal foil can be used. The negative electrode current collector may be porous. Examples of the material of the negative electrode current collector include stainless steel, nickel, nickel alloy, copper, and copper alloy. The thickness of the negative electrode current collector may be, for example, 1 to 50 µm, and may be 5 to 30 µm, but not limited thereto.

### <Positive electrode>

The positive electrode includes a positive electrode active material. The positive electrode usually includes a positive electrode collector, and a layer of a positive electrode mixture (hereinafter referred to as a "positive electrode mixture layer") held on the positive electrode collector. The positive electrode mixture layer can be formed by applying a positive electrode slurry of constituent components of the positive electrode mixture dispersed in a dispersion medium, onto a surface of the negative electrode current collector, followed by drying. The dry applied film may be rolled as necessary. The positive electrode mixture includes a positive electrode active material as an essential component, and may include, as optional components, a binder, a thickener, and the like.

The positive electrode active material may be any material that can be used as a positive electrode active material for nonaqueous electrolyte secondary batteries (esp. for lithium-ion secondary batteries), but in view of achieving high capacity, includes at least a lithium-transition metal composite oxide (composite oxide N) containing nickel as a transition metal. The proportion of the composite oxide N in the positive electrode active material is, for example, 70 mass% or more, may be 90 mass% or more, and may be 95 mass% or more.

The composite oxide N may be, for example, a lithium-transition metal composite oxide having a layered rock-salt type structure and containing Ni and at least one selected from the group consisting of Co, Mn, and Al. Hereinafter, a lithium-transition metal composite oxide which has a layered rock-salt type structure and contains Ni and at least one selected from the group consisting of Co, Mn, and Al and in which the proportion of Ni in metal elements other than Li is 80 atom% or more is sometimes referred to as a "composite oxide HN." The proportion of the composite oxide HN in the composite oxide N used as the positive electrode active material is, for example, 90 mass% or more, may be 95 mass% or more, and may be 100%. The higher the proportion of Ni is, the more the lithium ions can be extracted from the composite oxide HN during charging, which can lead to high capacity. Co, Mn, and Al contribute to stabilizing the crystal structure of the composite oxide HN with high Ni content.

The composite oxide HN is represented by, for example, a formula: Li_{α}Ni_{(1-x1-x2-y-z)}Coₓ₁Mnₓ₂Al_{y}M_{z}O_{2+β}. The element M is an element other than Li, Ni, Co, Mn, Al, and oxygen. Mn contributes to stabilizing the crystal structure of the composite oxide HN, and Mn is inexpensive, the inclusion of which in the composite oxide HN is advantageous for cost reduction. Al contributes to stabilizing the crystal structure of the composite oxide HN.

In the above formula, α representing the atomic ratio of lithium is, for example, 0.95 ≤ α ≤ 1.05. The value of α increases or decreases during charging and discharging. In (2+β) representing the atomic ratio of oxygen, β satisfies -0.05 ≤ β ≤ 0.05.

The value of 1-x1-x2-y-z (= v) representing the atomic ratio of Ni is, for example, 0.8 or more, may be 0.85 or more, and may be 0.90 or more, or 0.95 or more. The value of v may be 0.98 or less, or may be 0.95 or less. The value of x1 representing the atomic ratio of Co is, for example, 0.1 or less (0 ≤ x1 ≤ 0.1), x2 representing the atomic ratio of Mn is, for example, 0.1 or less (0 ≤ x2 ≤ 0.1), y representing the atomic ratio of Al is, for example, 0.1 or less (0 ≤ y ≤ 0.1), and z representing the atomic ratio of the element M is, for example, 0 ≤ z ≤ 0.10.

The element M may be at least one selected from the group consisting of Ti, Zr, Nb, Mo, W, Fe, Zn, B, Si, Mg, Ca, Sr, Sc, and Y In particular, when at least one element selected from the group consisting of Nb, Sr, and Ca is contained in the composite oxide HN, the surface structure of the composite oxide HN is stabilized, the resistance is reduced, and the elution of metal is further suppressed. It is more effective when the element M is localized near the particle surfaces of the composite oxide HN.

As the binder for the positive electrode, for example, a resin material is used. Examples of the binder include a fluorocarbon resin, a polyolefin resin, a polyamide resin, a polyimide resin, an acrylic resin, and a vinyl resin. The binder may be used singly, or in combination of two or more kinds.

Examples of the conductive material include carbon nanotubes (CNTs), carbon fibers other than CNTs, and conductive particles (e.g., carbon black, graphite).

The dispersion medium used in the positive electrode slurry is not particularly limited, but may be, for example, water, an alcohol, N-methyl-2-pyrrolidone (NMP), a mixed solvent of these, or the like.

As the positive electrode current collector, for example, a metal foil may be used. The positive electrode current collector may be porous. The porous current collector includes, for example, a net, a punched sheet, and an expanded metal. Examples of the material of the positive electrode current collector include stainless steel, aluminum, aluminum alloy, and titanium. The thickness of the positive electrode current collector may be, for example, 1 to 50 µm, and may be 5 to 30 µm, but not limited thereto.

### <Electrolyte>

The electrolyte may be a liquid electrolyte (electrolyte solution), may be a gel electrolyte, and may be a solid electrolyte. The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide. The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

The liquid electrolyte (electrolyte solution) contains, for example, a solvent and a solute dissolved in the solvent. The solute is an electrolyte salt that ionically dissociates in the electrolyte. The solute may include, for example, a lithium salt. Components of the electrolyte other than the solvent and the solute are additives. The electrolyte may include various additives.

The solvent may be an aqueous solvent or a nonaqueous solvent. As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

The concentration of the lithium salt in the electrolyte may be 1 mol/liter or more and 2 mol/liter or less, and may be 1 mol/liter or more and 1.5 mol/liter or less. The lithium salt concentration, however, is not limited to the above.

### <Separator>

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. A preferred material of the separator is polyolefin, such as polypropylene and polyethylene.

### <Secondary battery>

In an exemplary structure of the secondary battery, an electrode group formed by winding a positive electrode and a negative electrode with a separator interposed therebetween is housed together with a liquid electrolyte in an outer body. Without limited thereto, a different form of electrode group may be adopted. For example, a stacked-type electrode group formed by stacking the positive electrode and the negative electrode with the separator interposed therebetween may be adopted. The form of the secondary battery is also not limited, and may be cylindrical, prismatic, coin, button, or laminate type. The secondary battery includes nonaqueous electrolyte secondary batteries, such as lithium-ion secondary batteries containing a liquid electrolyte and solid-state batteries containing a gel electrolyte or a solid electrolyte.

In the following, a structure of the secondary battery will be described with reference to FIG. 1. FIG. 1 is a longitudinal cross-sectional view of a cylindrical secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode 15 is connected to the metal plate 13. Therefore, the valve body 12 functions as a positive external terminal. A negative electrode lead 16a extended from the negative electrode 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode 15 and the negative electrode 16 wound together, with the separator 17 interposed therebetween.

In the following, the present disclosure will be specifically described with reference to Examples and Comparative Examples. The present disclosure, however, is not limited to the following Examples.

### «Example 1»

### [Synthesis of composite particles]

In 60 mL of an aqueous solution A in which 100 mM of aniline and 30 mM of phytic acid were dissolved, 2 g of nanosilicon particles (average particle diameter 40 nm) were dispersed. Next, 20 mL of an aqueous solution B in which 125 mM of ammonium persulfate was dissolved was poured into the aqueous solution A in which the nanosilicon particles were dispersed, and stirred together at room temperature for 3 days, to allow polymerization of aniline to proceed, to form a composite A1.

The composite A1 was separated by suction filtration, and then, thoroughly washed with distilled water. The composite after washing with water was vacuum-dried at 60 °C. The composite A1 after drying was pulverized in a mortar, and passed through a sieve with a mesh size of 75 µm. The pulverized composite A1 (composite particles A1) was added to 500 mL of pure water, and washed with water under stirring for 5 hours. Then, the composite particles A1 were separated by suction filtration, and vacuum-dried at 60 °C.

### (Particle size distribution)

The volume-based particle size distribution of the composite particles was measured by a laser diffraction scattering method. The D50 of the composite particles A1 was 29 µm, the D10 was 1.9 µm, and the D90 was 122 µm.

### (ICP-AES analysis)

The content of the silicon nanoparticles in the composite particles A1 was measured by ICP-AES, which was 67 mass%. The content of the conductive polymer was estimated to be about 33 mass%. The content of the sulfur element derived from the ammonium persulfate in the composite particles A1 was measured by ICP-AES, which was 0.03 mass%.

### (Volume resistivity)

The volume resistivity of the composite particles A1 was measured under a pressure of 204 kgf/cm², by a four-point probe method using a powder resistivity meter (Loresta SP available from Mitsubishi Chemical Analytech Co., Ltd.), which was 1.6×10⁶ Ω·cm.

### (FT-IR analysis)

The conductive polymer (polyaniline) in the composite particles A1 was analyzed by FT-IR. The result confirmed the absorption of the stretching and vibration attributed to the quinoid structure produced by proton doping. The result also confirmed the absorption attributed to the stretching of aromatic rings and the absorption attributed to N-H stretching.

### [Preparation of negative electrode]

The composite particles A1, a sodium salt of carboxymethyl cellulose (CMC-Na), styrene-butadiene rubber (SBR), polyacrylic acid (PAA), and single-walled carbon nanotubes (SWCNTs) were mixed together in a mass ratio of composite particles A1:CMC-Na:SBR:PAASWCNTs = 100:5:5:5:0.5. To the resultant mixture, water was added, and stirred together using a mixer (T.K. HIVIS MIX, available from PRIMIX Corporation), to prepare a negative electrode slurry. Next, the negative electrode slurry was applied onto one side of a copper foil (negative electrode current collector). The applied film was dried, and then rolled, to give a negative electrode with a negative electrode mixture layer having a density of 0.7 g/cm³ formed on one side of the copper foil. The thicknesses TA1₀₋₁ to TA1₀₋₅ of the negative electrode mixture layer were measured at five spots.

The negative electrode was cut into a shape of 20 mm by 20 mm having a protruding portion of 5 mm by 5 mm. The negative electrode mixture layer in the protruding portion was peeled off, to expose the copper foil. Then, a negative electrode tab lead was connected to the exposed portion of the negative electrode current collector, and a predetermined region in the outer periphery of the negative electrode tab lead was covered with an insulating film.

### (Mixture layer resistance)

The volume resistivity of the negative electrode mixture layer was measured using an electrode resistance measurement system (RM2610, available from Hioki E.E. Corporation), which was 8.3 Ω·cm.

### (Interface resistance)

The interface resistance was measured using an electrode resistance measurement system (RM2610, available from Hioki E.E. Corporation), which was 0.35 Ω·cm².

### [Preparation of counter electrode]

A counter electrode was prepared by attaching a 300-µm-thick lithium metal foil to one side of a copper foil.

The counter electrode was cut into the same shape as the negative electrode, and the lithium metal foil at the protruding portion was peeled off, to expose the copper foil. Then, a counter electrode tab lead was connected to the exposed portion of the copper foil in the same manner as in the negative electrode, and a predetermined region in the outer periphery of the counter electrode tab lead was covered with an insulating film.

### [Preparation of nonaqueous electrolyte]

A nonaqueous electrolyte was prepared by adding 1.3 mol/liter of lithium hexafluorophosphate (LiPF₆), to a mixed solvent of ethylene carbonate (EC), ethyl methyl carbonate (EMC), and dimethyl carbonate (DMC) mixed in a volume ratio of EC:EMC:DMC = 4:1:15.

### [Preparation of cell for evaluation]

Using the negative electrode and the counter electrode obtained above, a cell having a design capacity regulated by the negative electrode of 25 mAh was fabricated. The negative electrode and the counter electrode were placed facing each other, such that the negative electrode mixture layer and the lithium metal foil overlapped each other, with two sheets of an aramid-coated separator (thickness 15 µm) made of polyethylene interposed therebetween, to obtain an electrode group. Next, an Al-laminated film (thickness 100 µm) cut out in a rectangular shape was folded in half, and the ends of the long sides were heat-sealed, into a tubular shape. The obtained electrode group was inserted into the tube from one of the short sides, and with the end face of the Al laminate film aligned with the insulating films of the respective tab leads, the one side was heat-sealed. Next, 0.3 cm³ of the nonaqueous electrolyte was injected into the tube from the short side which was left not heat-sealed. After the injection of electrolyte, an operation of allowing to stand for 3 minutes under a reduced pressure of 0.02 MPa, and then returning to atmospheric pressure was repeated twice, to impregnate the negative electrode mixture layer with the nonaqueous electrolyte. Lastly, the end face of the Al laminate film on the side from which the electrolyte had been injected was heat-sealed, to complete a cell A1 for evaluation. The cell for evaluation was prepared in a dry air atmosphere with a dew point of -60 °C or less.

### [Evaluation]

The cell for evaluation was sandwiched between a pair of 10×5 cm stainless steel (thickness 6 mm) clamps and secured under a pressure of 1 MPa.

### <First cycle>

In a 25 °C constant temperature bath, lithium was charged to the negative electrode at a constant current of 0.1C (1C is a current value at which the design capacity can be discharged in one hour) until the cell voltage reached 0.005 V, followed by a rest for 20 minutes. Next, lithium was charged to the negative electrode at a constant current of 0.01C until the cell voltage reached 0.005 V, followed by a rest for 20 minutes. Furthermore, lithium was charged to the negative electrode at a constant current of 0.001C until the cell voltage reached 0.005 V, followed by a rest for 20 minutes.

Subsequently, lithium was discharged from the negative electrode at a constant current of 0.1C until the cell voltage reached 1.0 V, followed by a rest for 20 minutes. Next, lithium was discharged from the negative electrode at a constant current of 0.01C until the cell voltage reached 1.0 V, followed by a rest for 20 minutes. Furthermore, lithium was discharged from the negative electrode at a constant current of 0.001C until the cell voltage reached 1.0 V, followed by a rest for 20 minutes.

### <Second cycle>

Lithium was charged to the negative electrode at a constant current of 0.1C until the cell voltage reached 0.005 V, followed by a rest for 20 minutes. Next, lithium was charged to the negative electrode at a constant current of 0.01C until the cell voltage reached 0.005 V, followed by a rest for 20 minutes. Furthermore, lithium was charged into the negative electrode at a constant current of 0.001C until the cell voltage reached 0.005 V, followed by a rest for 20 minutes.

Subsequently, the cell was disassembled, and the thicknesses TA1₁₋₁ to TA1₁₋₅ of the negative electrode mixture layer were measured at five spots. The expansion rate = TA1₁₋ₙ/TA1₀₋ₙ was calculated from an initial thickness TA1₀₋ₙ and an expanded thickness TA1₁₋ₙ (n = 1, 2, 3, 4, 5). The average of these expansion rates was 1.43.

### <<Comparative Example 1»

A cell B1 for evaluation was fabricated and evaluated in the same manner as in Example 1, except that, instead of the composite particles A1, a general-purpose silicon-containing material with no voids within the particles, i.e., SiOₓ particles where x = 1 (in which nanosized Si was dispersed in a matrix of a SiO₂ matrix phase), was used. The average value of the expansion rate = TB1₁₋ₙ/TB1₀₋ₙ was calculated from an initial thickness TB1₀₋ₙ (n = 1, 2, 3, 4, 5) and an expanded thickness TB1₁₋ₙ (n = 1, 2, 3, 4, 5), which was 1.95.

### <<Comparative Example 2»

Composite particles B2 were synthesized in the same manner as in Example 1, except that phytic acid was not used in the synthesis of the composite particles. A cell B2 for evaluation was fabricated using the composite particles B2 and evaluated in the same manner as in Example 1.

The volume resistivity of the negative electrode mixture layer was measured, which was 32 Ω·cm.

The interface resistance was measured, which was 0.98 Ω·cm². The results are summarized in Table 1.

**[Table 1]**

| | expansion rate | mixture layer resistance (Ω·cm) | interface resistance (Ω·cm²) |
|---|---|---|---|
| A1 | 1.43 | 8.3 | 0.35 |
| B1 | 1.95 | - | - |
| B2 | - | 32.0 | 0.98 |

As understood from Table 1, when using the composite particles A1, the expansion rate was significantly reduced, as compared to when using the SiOₓ particles. Also, the presence or absence of a dopant resulted in a significant difference in the volume resistivity of the negative electrode mixture layer and the interface resistance.

### [Industrial Applicability]

A secondary battery including a negative electrode active material according to the present disclosure is useful as a main power source for mobile communication devices, portable electronic devices etc., an in-vehicle power source, and the like, but the application thereof is not limited thereto.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing assembly, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: groove, 23: first insulating plate, 24: second insulating plate, 16: negative electrode

## Claims

1. A negative electrode active material for secondary batteries, comprising:
a composite particle containing a conductive polymer and Si-containing particles, wherein
in the composite particle, a plurality of the Si-containing particles are linked together via the conductive polymer, and
the conductive polymer is doped with a dopant.

2. The negative electrode active material for secondary batteries according to claim 1, wherein the composite particle has free volume.

3. The negative electrode active material for secondary batteries according to claim 1 or 2, wherein a content of the Si-containing particles in the composite particle is 30 mass% to 90 mass%.

4. The negative electrode active material for secondary batteries according to any one of claims 1 to 3, wherein the conductive polymer includes polyaniline.

5. The negative electrode active material for secondary batteries according to any one of claims 1 to 4, wherein a content of the dopant in the composite particle is 0.1 mass% to 10 mass%.

6. The negative electrode active material for secondary batteries according to any one of claims 1 to 5, wherein the dopant has an oxoacid group.

7. The negative electrode active material for secondary batteries according to any one of claims 1 to 6, wherein the dopant contains phosphorus element.

8. The negative electrode active material for secondary batteries according to claim 7, wherein the dopant contains a phosphoric acid ester.

9. The negative electrode active material for secondary batteries according to claim 8, wherein the phosphoric acid ester includes phytic acid.

10. The negative electrode active material for secondary batteries according to any one of claims 1 to 9, wherein at least part of surfaces of the Si-containing particles is covered with a carbonaceous material having conductivity.

11. The negative electrode active material for secondary batteries according to any one of claims 1 to 10, wherein a powder resistivity of the composite particle is 10³ Ω·cm to 10⁷ Ω·cm.

12. The negative electrode active material for secondary batteries according to any one of claims 1 to 11, wherein
the composite particle contains sulfur element, and
a content of the sulfur element in the composite particle is less than 0.05 mass%.

13. The negative electrode active material for secondary batteries according to any one of claims 1 to 12, wherein an average particle diameter of the Si-containing particles is 10 nm to 500 nm.

14. A negative electrode for secondary batteries, comprising: the negative electrode active material for secondary batteries of claim 1.

15. A secondary battery, comprising: a positive electrode; a negative electrode; and a nonaqueous electrolyte, wherein
the negative electrode is the negative electrode for secondary batteries of claim 14.
